Europäisches Patentamt

European Patent Office

Office européen des brevets

(19)

(11) Veröffentlichungsnummer: **0 293 428**
**B1**

(12) **EUROPÄISCHE PATENTSCHRIFT**

(45) Veröffentlichungstag der Patentschrift: **20.06.90**

(21) Anmeldenummer: **87907961.4**

(22) Anmeldetag: **09.12.87**

(86) Internationale Anmeldenummer:
**PCT/EP87/00767**

(87) Internationale Veröffentlichungsnummer:
**WO 88/04371 16.06.88 Gazette 88/13**

(51) Int. Cl.⁵: **F 16 C 13/00**

(54) **ROLLENKÖRPER AUS VERBUNDWERKSTOFF.**

(30) Priorität: **12.12.86 DE 3642512**

(43) Veröffentlichungstag der Anmeldung:
**07.12.88 Patentblatt 88/49**

(45) Bekanntmachung des Hinweises auf die
Patenterteilung:
**20.06.90 Patentblatt 90/25**

(84) Benannte Vertragsstaaten:
**AT BE CH DE FR GB LI**

(56) Entgegenhaltungen:
**FR-A-2 367 557**
**FR-A-2 467 030**

Patent Abstracts of Japan, vol.9, no.176 (M-398)(1899), 20.07.1985, & JP,A,6046889 (Kuroki Kogyosho K.K.) 13. März 1985

Patent Abstracts of Japan, vol.6, no.263 (M-181)(1141), 22.12.1982, & JP,A,57156890 (Kawasaki Jukogyo K.K.) 28. September 1982

(73) Patentinhaber: **OESTMANN, Carsten**
**Pappelberg 67**
**D-3300 Braunschweig (DE)**

(72) Erfinder: **OESTMANN, Carsten**
**Pappelberg 67**
**D-3300 Braunschweig (DE)**

(74) Vertreter: **Lins, Edgar, Dipl.-Phys. et al**
**Patentanwälte Gramm + Lins Theodor-Heuss-Strasse 2**
**D-3300 Braunschweig (DE)**

Courier Press, Leamington Spa, England.

**Beschreibung**

Die Erfindung betrifft einen Rollenkörper, insbesondere als Förderrolle mit einem Rollernmantel aus Schleudergruß für die Hüttenindustrie, mit einem äußeren, hochfesten ersten Metallmantel, einem damit verbundenen inneren, niedrig legierten zweiten Metallmantel und mit wenigstens einem an dem Rollenmantel axial anliegenden stirnseitigen Anschlußteil, insbesondere Lagerzapfen, das durch eine radiale Umfangs-Schweißnaht mit den beiden Metallmänteln verbunden und in der Radialebene der Umfangs-Schweißnaht hohl ausgebildet ist.

Derartige Rollenkörper aus Verbundwerkstoff werden in er Hüttenindustrie als Förderrollen für die glühenden Stahlbrammen verwendet. Die Mantelflächen der Rollenkörper sind einem erheblichen, mechanischen Abrieb beim Transport der Strahlbrammen, Korrosionseinflüssen durch aggressives Kühlwasser und einer Ermüdung durch Thermoschockbehandlungen ausgesetzt. Die Rollen müssen aus Festigkeitsgründen eine große Wandstärke aufweisen. Da jedoch nur die äußere Schicht des Rollenkörpers vom Verschleiß betroffen ist, werden für die Rollenkörper Verbundwerkstoffe aus einem inneren, niedrig legierten Metallmantel und einem äußeren, hochfesten Metallmantel hergestellt. Die preiswerte Hertellung dieser Verbund-Rollenmäntel gelingt im Schleudergruß erfaren. Die Rollenmäntel werden durch stirnseitige Lagerzapfen zu der Förderrolle ergänzt. Die Verbindung des Verbund-Rollenmantels mit den nicht im Schleudergußverfahren herstellbaren Lagerzapfen erfolgt durch eine ringförmige, radiale Schweißnaht, die in bekannter Technick tulpenförmig ausgebildet ist und mit einem Schweiß-Zusatzwerkstoff gefüllt ist. Die Oberfläche der durch den Zusatzworkstoff gebildeten Schweißnaht wird fluchtend mit der Oberfläche des Rollenmantels und der stirnseitigen Anschlußteile gearbeitet. Aus Gewichtsgründen setzt die Wandung des stirnseitigen Lagerzapfens die Wandung des Rollenmantels um eine gewisses Stück fort, weist also keine axiale Überlappung mit dem Rollenmantel auf.

In der Praxis hat sich gezeigt, daß derartig hergestellte Rollenkörper den ihnen gestellten Anforderungen nur für eine relativ kurze Zeit genügen. Die für die Schweißung benötigten Zusatzwerkstoffe weisen im allgemeinen eine geringere Abrieb- bzw. Wärmefestigkeit aus als der äußere Metallmantel des Rollenmantels, so daß es im Bereich der relativ brieten Schweißnähte zu rillenförmigen Einbuchtungen kommt, Hierdurch werden auch die zylindrischen Oberflächen der stirnseitigen Anschlußteile sowie die unmittelbar den Schweißnähten benachbarten Bereiche des äußeren Metallmantels in Mitleidenschaft gezogen.

Die bekannten Rollenkörper weisen ferner den Nachteil auf, daß die aus unterschiedlichen Materialien bestehenden Metallmäntel des Verbund-Rollermantels während des Schweißvorganges aufgrund der dabei eintretenden thermischen Belastung sich unterschiedlich stark ausdehnen, so daß die Gefahr des Ablösens der beiden Metallmäntel voneinander besteht, wodurch der Rollenkörper bereits bei der Herstellung unbrauchbar wird. Das Auffüllen der Schweißnaht mit dem Zusatzwerkstoff bedingt darüber hinaus eine ungünstige Konstellation, weil ein Zusatzwerkstoff regelmäßig nur für die Verbindung zweier Materialien ausgelegt werden kann. In bekannter Technik ist daher der Zusatzwerkstoff so eingebracht worden, daß lediglich der innere Metallmantel mit dem stirnseitigen Anschlußteil verbunden worden ist, wobei ein allmählicher Übergang von dem geringeren Außendurchmesser des inneren Metallmantels zu dem Außendurchmesser des stirnseitigen Anschlußteils vorgenommen worden ist. Nach der Ausbildung dieser Schweißnaht ist die verbliebene Rille anschließend mit Zusatzwerkstoff aufgefüllt worden, um in Bereich der Schweißnaht eine ebene Oberfläche auszubilden. Ersichtlich kann der Verbund von stirnseitigem Anschlußteil und Rollenmantel nur aufgrund der zunächst hergestellten Schweißnaht erfolgen, wohingegen das später aufgefüllte Material der Schweißnaht zur Festigkeit der Schweißverbindung nichts mehr beiträgt.

Durch die FR—A—2 467 030 ist ein Rollenkörper bekannt, der die Besonderheit einer inneren Kühlung aufweist. Zur Ausbildung der Führungskanäle setzt sich das stirnseitige Anschlußteil als massives Teil in das Innere des Rollenmantels fort und weist dort Verteilungsleitungen für die Kühlflüssigkeit auf, die gegen das Innere des Rollenmantels geleitet wird. Die Verbindung zwischen dem Rollenmantel und dem stirnseitigen Anschlußteil erfolgt durch eine herkömmliche V-förmige Schweißnaht, die mit einem Zusatzwerkstoff gefüllt ist.

Durch die JP—A—60—46889 (Patent Abstracts of Japan Vol. 9, No. 176) ist ein Rollenkörper bekannt, der aus einem massiven zylindrischen Kern besteht, auf den zwei Hülsen zur Bildung von Oberflächenschichten aufgeschoben sind. Die Verbindung des Kerns mit den beiden Hülsen erfolgt durch einen Heißpreßvorgang. Vor dem Heißpressen ist im Endbereich des Rollenkörpers eine radiale Umfangs-Schweißnaht im Elektronenstrahl-Schweißverfahren eingebracht worden, die sich durch die beiden äußeren Hülsen in die Oberfläche des massiven Kerns erstreckt. Diese Schweißnaht hat die Funktion, den Rollenkörper in axialer Richtung abzudichten, um das Eindichten von Fluiden in die Zwischenräume zwischen Kern und Hülse bzw. zwischen den beiden Hülsen zu verhindern. Eine axiale Verbindung zwischen unterschiedlichen Teilen wird durch diese Schweißnaht nicht hergestellt.

Durch JP—A—57—156890 (Patent Abstracts of Japan Vol. 6, Nr. 263) ist es bekannt, ein doppelwandiges Rohr stirnseitig durch das Aufschweißen eines Dichtungsringes abzudichten. Die Schweißnaht wird im Elektronenstrahl-Schweißverfahren hergestellt und ist nach radial innen und außen offen. Da auf den Dichtring keine hohen Kräfte wirken können, ist die Schweißnaht keinen hohen mechanischen Belastungen ausgesetzt.

Der Erfindung leigt die Aufgabe zugrund, einen Rollenkörper der eingangs erwähnten Art so auszugestalten, daß er eine voll wirksame Schweißverbindung zwischen dem stirnseitigen Anschlußteil und dem Rollenmantel über dessen gesamte Tiefe und eine durch die ausgebildete Schweißnaht nicht beeinträchtigte Stabilität auf der Mantelfläche des Rollenkörpers aufweist.

Diese Aufgabe wird erfindungsgemäß bei einem Rollenkörper der eingangs erwähnten Art dadurch gelöst, daß die Umfangs-Schweißnaht im Elektronenstrahl-Schweißverfahren hergestellt ist und daß das an dem Rollenmantel axial anliegende stirnseitige Anschlußteil zur Ausbildung einer die radiale Umfangs-Schweißnaht nach radial innen abschließenden Nahtwurzel mit einem zylindrischen axial vorspringenden Ansatz versehen ist.

Die Anwendung des Elektronenstrahl-Schweißverfahrens für Rollenkörper der eingangs erwähnten Art ist bisher nicht in Betracht gezogen worden, weil hierzu die komplette Rollenkörper in eine evakuierbare Kammer gebracht werden müssen, in der der Elektronenstrahl erzeugt wird und weil eine im Elektronenstrahl-Schweißverfahren hergestellte Drei-Stoff-Verbindung nicht für realisierbar gehalten worden ist. Durch den stark fokussierten Elektronenstrahl läßt sich jedoch eine sehr schmale Schweißnaht herstellen, die sogar ohne Zusatzwerkstoff auskommt. Die schweißwirkung setzt lediglich durch das Aufschmelzen der stumpf aneinanderstoßenden Werkstoffe ein, die im geschmolzenen Zustand eine Verbindung miteinander eingehen. Für die Zuverlässigkeit der erfindungsgemäßen Schweißnaht ist es wesentlich, daß nicht — wie bei Elektronenstrahl-Schweißungen allgemein üblich — eine Durchschweißung vorgenommen wird sondern eine Einschweißung, d. h. eine Schweißnaht, die nach einer Seite hin im Material endet. Derartige Einschweißungen werden üblicherweise wegen dabei auftretender Einkerbungen im Schweißnahtboden (Spiking) vermieden. Die Einkerbungen geben bei Belastungen Anlaß zu Rißbildungen. Erfindungsgemäß ist das stirnseitige Anschlußteil mit einem kleinen zylindrischen Ansatz versehen, in dem die Nahtwurzel der Schweißnaht ausgebildet wird. Da der Ansatz nicht im belasteten Bereich des stirnseitigen Anschlußteils liegt, sind dort Auftritte der Einkerbungen unschädlich. Die erfindungsgemäße Schweißnaht kann daher mit großer Zuverlässigkeit hergestellt werden.

Eine sehr schmale Schweißnaht, die an der Oberfläche des Rollenkörpers eine vernachlässigbare Breite aufweist, läßt sich herstellen, wenn die Schweißnaht über die gesamte Tiefe der beiden Metallmäntel ohne Zusatzwerkstoffe hergestellt ist.

In einer alternativen Ausführungsform kann die Schweißnaht in zwei Verfahrensschritten hergestellt sein. Die Schweißnaht zwischen dem inneren Metallmantel und dem stirnseitigen Anschlußteil wird dabei ohne Zusatzwerkstoff und die Schweißnaht zwischen dem äußeren Metallmantel und dem stirnseitigen Anschlußteil als breitere Schweißnaht mit Zusatzwerkstoff hergestellt. Dadurch wird erreicht, daß in beiden Teilen der Schweißnaht lediglich zwei verschiedene Materialien miteinander verbunden werden, wobei im Bereich des äußeren Metallmantels ein angepaßter Zustzwerkstoff eingebracht wird. Die hierbei entstehende, an der Oberfläche des Rollenkörpers sichtbare Schweißnaht weist dabei immer noch einen Bruchteil der Breite der herkömmlichen, tulpenförmigen Schweißnahte auf.

Der erfindungsgemäße Rollenkörper bietet die Möglichkeit, daß sich das Material des äußeren Metallmantels über die Manteloberfläche des stirnseitigen Anschlußteils erstreckt, daß also auch das stirnseitige Anschlußteil an seiner Oberfläche mit dem verschleißfesten, hoch legierten Material versehen ist, Mit dem Elektronenstrahl-Schweißverfahren läßt sich zunächst das Material des stirnseitigen Anschlußteils mit dem inneren Metallmantel verbinden und anschließend in der zweiten Stufe eine Schweißverbindung zwischen den gleichen Materialien des äußeren Metallmantels und der Oberfläche des stirnseitigen Anschlußteils herstellen.

In einer besonders bevorzugten Ausführungsform dieser Variante wird die Verbindung zwischen der zusätzlich auf das stirnseitige Anschluteil aufgebrachten verschleißfesten Oberflächenschicht und dem stirnseitigen Anschlußteil durch eine ringförmige, axial ausgerichtete Elektronenstrahl-Schweißnacht bewirkt. Auf diese Art wird eine einfache MÖglichkeit geschaffen, das im allgemeinen nicht im Schleudergußverfahren hergestellte Verbund-Anschlußteil herzustellen, ohne ein zeitraubendes und aufwendiges Auftrags-Schweißverfahren anwenden zu müssen. Die Oberfläche des Anschlußteils wird einstückig mit dem ersten Metallmantel gefertigt und auf die bearbeitete Mantelfläche des Anschlußteils aufgeschoben. Danach wird mit dem Elektronenstrahl-Schweißverfahren die Schweißrebindung zwischen der Oberfläche und der Mantelfläche hergestellt.

Die Erfindung soll im folgenden anhand von in der Zeichnung dargestellten Ausführungsbeispielen näher erläutert werden. Es zeigen:

Figur 1 einen Rollenkörper mit Lagerzapfen als stirnseitige Anschlußteile und einem Rollenmantel, bestehend aus einem inneren Metallmantel und einem äußeren Metallmantel.

Figur 2 eine Detaildarstellung der Verbindung zwischen stirnseitigem Anschlußteil und Rollenmantel bei einer Elektronenstrahl-Schweißnaht ohen Zusatzwerkstoff

Figur 3 eine Detaildarstellung gemäß Figur 1 bei einem zweistufigen Elektronenstrahl-Schweißverfahren, bei dem in der zweiten Schweißstufe Zusatzwerkstoff verwendet wird

Figur 4 eine Detaildarstellung für eine Anordnung ähnlich der Figur 3, bei der jedoch das stirnseitige Anschlußteil mit einer dem äußeren Metallmantel entsprechenden Oberfläche versehen ist

Figur 5 eine Detaildarstellung der Variante gemäß Figur 4 mit einer zusätzlichen axialen Schweißnaht.

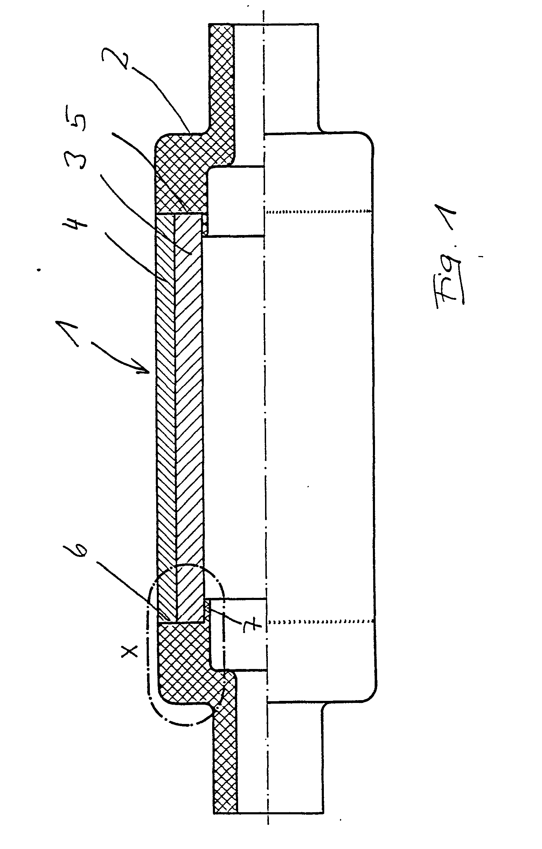

Der in Figur 1 dargestellte Rollenkörper besteht aus einem hohlzylindrischen Rollenmantel 1, der mit zwei Lagerzapfen als stirnseitige Anschlußteile 2 verbunden ist, der aus einem inneren Metallmantel 3 und einem äußeren Metallmantel 4 besteht. Die beiden Metallmäntel 3, 4 des Rollenmantels 1 sind vorzugsweise im Schleudergußverfahren als Verbundwerkstoff hergestellt. Der Rollenmantel 1 wird in eine ringförmige Stufe 5 des stirnseitigen Anschlußteils 2 eingelegt. Zur Bildung der ringförmigen Stufe weist das stirnseitige Anschlußteil 2 einen axial vorspringenden Ansatz 7 auf, der sich radial innen an den Rollenmantel anlegt. Die Oberfläche des äußeren Metallmantels 4 fluchtet mit der Oberfläche des stirnseitigen Anschlußteils 2. Die radiale Trennfuge zwischen dem stumpf aneinanderstoßenden Rollenmantel 1 und stirnseitigen Anschlußteil 2 wird durch eine Schweißnaht 6 geschlossen, die erfindungsgemäß im Elektronenstrahl-Schweißverfahren im Vakuum hergestellt ist. Die Schweißnaht 6 ist als Einschweißung ausgebildet und erstreckt sich mit ihrer Nahtwurzel 8 in den radialen Bereich des Ansatzes 7 hinein. Eventuelle Einkerbungen (Spikings) im Bereich des Bodens der Nahtwurzel 8 werden durch Festigkeitsbelastungen der Schweißnaht 6 nicht belastet, wirken sich daher auf die Festigkeit der Schweißnaht 6 nicht aus. Durch die Ausbildung der Schweißnaht 6 als Einschweißung werden Materialverluste durch Austropfen vermieden und es wird eine definierte Materialverteilung in der Schweißnaht 6 sichergestellt.

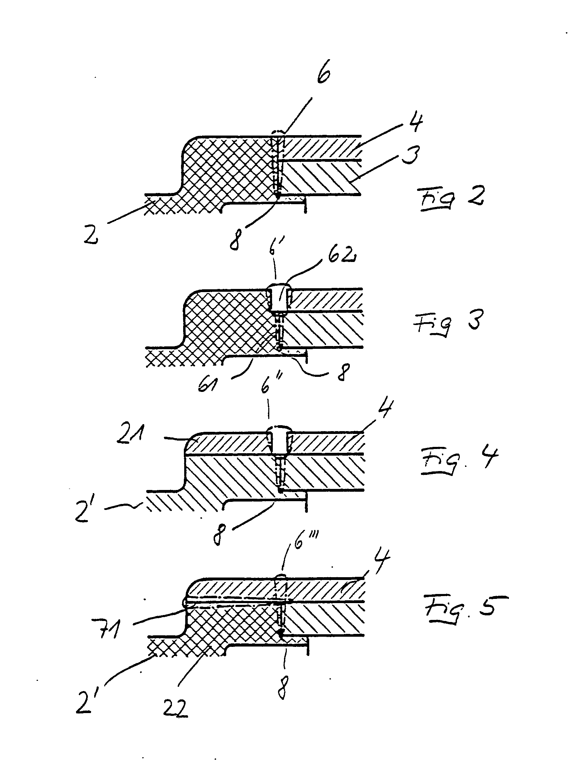

Die Figuren 2 bis 5 zeigen Varianten der Verbindung zwischen dem Rollenmantel 1 und einem stirnseitigen Anschlußteil 2. In Figur 2 ist das stirnseitige Anschlußteil 2 durchgehend auf demselben Material gebildet. Der Rollenmantel 1 ist über seine gesamte Tiefe mit einer radialen, ringförmigen Schweißnaht 6 mit dem stirnseitigen Anschlußteil 2 verbunden, wobei die Schweißnaht 6 ohne Zusatzwerkstoff hergestellt ist. Hierdurch ergibt sich eine außerordentlich schmale Schweißnaht 6, die jedoch aus den drei aufgeschmolzenen und vermengten Materialien des stirnseitigen Anschlußteils 2, des inneren Metallmantels 3 und des äußeren Metallmantels 4 besteht. Aufgrund der geringen Breite ist die Schweißnaht 6 gegen Verschleißerscheinungen relativ unanfällig.

Bei der in Figur 3 dargestellten Ausführungsform ist eine Schweißnaht 6'. zwischen den identischen Teilen 2, 3, 4 wie in Figur 2 in zwei Stufen 61, 62 ausgebildet. Die erste Stufe 61 der Schweißnaht 6' verbindet den inneren Mantelkörper 3 mit dem angrenzenden Teil des stirnseitigen Anschlußteils 2 ohne Zusatzwerkstoff. Zwischen dem äußeren Mantelteil 4 und dem stirnseitigen Anschlußteil 2 ist ein Zwischenraum ausgebildet, so daß sich eine breitere Schweißnahtstufe 62 ergibt, die im Elektronenstrahlverfahren mit Zusatzwerkstoff gefüllt ist.

Bei der Herstellung der zweiten Schweißnahtstufe 62 wird die bereits verfestigte Schweißnahtstufe 61 nicht wesentlich tangiert, so daß in beiden Schweißnahtstufen 61, 62 im wesentlichen ein Verbung zwischen zwei Materialien nämlich dem material des stirnseitigen Anschlußteils 2 und des inneren Metallmantels 3 einerseits bzw. des stirnseitigen Anschlußteils 2 und des Materials des äußeren Metallmantels 4 andererseits hergestellt wird.

Bei den in den Figuren 4 und 5 dargestellten Ausführungsbeispielen ist ein stirnseitiges Mantelteil 2' vorgesehen, dessen Manteloberfläche 21 aus dem Material des äußeren Metallmantels 4 und in dessen Stärke ausgebildet ist. Dadurch wird erreicht, daß die gesamte äußere Manteloberfläche des Rollenkörpers aus dem hochfesten Material des äußeren Metallmantels 4 besteht.

Fig 4 zeigt eine radiale ringförmige Schweißnaht 6'', die zweistufig ausgebildet ist und in der gleichen Weise hergestellt wird wie die Schweißnaht 6'. Hierbei entsteht der Vorteil, daß in der zweiten Schweißstufe gleiche Materialien, nämlich der Oberfläche 21 und des äußeren Metallmantels 4 durch Schweißung mit Zusatzwerkstoff miteinander verbunden werden.

In der in Figur 5 dargestellten Variante ist bei der Herstellung des Rollenmantels 1 der äußere Metallmantel 4 mit einer größeren. Länge hergestellt als der innere Metallmantel 3, so daß der äußere Metallmantel 4 um eine Länge über den inneren Metallmantel 3 übersteht, die der Länge des stirnseitigen Anschlußteils 2 entspricht, auf der das stirnseitige Anschlußteil 2' mit der Oberfläche des äußeren Metallmantels 4 fluchtet. Das überstehende Stück des äußeren Metallmantels 4 bildet demgemäß den Oberflächenmantel 21 des stirnseitigen Anschlußteils 2'. Die erfindungsgemäß zur Verbindung des inneren Metallmantels 3 mit dem stirnseitigen Anschlußteil 2' vorgesehene Schweißnaht 6''', durchsticht den äußeren Metallmantel 4 und verschweißt einstufig — analog der Schweißnaht 6 in Figur 2 — den Rollenmantel 1 mit dem stirnseitigen Anschlußteil 2', über die gesamte Tiefe des Rollenmantels 1.

In dieser Ausführungsform ist der Oberflachenmantel 21 noch nicht mit dem Rumpf 22 des stirnseitigen Anschlußteils 2' verbunden. Für diese Verbindung zeigt Figur 5 eine überraschend einfache Möglichkeit, indem eine axial ringformige Schweißnaht 71 vorgesehen ist, die ohne Zusatzwerkstoff erstellt wird und sich bis zur radialen Schweißnaht 6''' erstreckt.

Der Aufwand für die Ausbildung der axialen Elektronenstrahl-Schweißnaht 71 ist gering, da der Rollenkörper für die Ausbildung der radialen Schweißnaht 6''' in eine Vakuumkammer verbracht werden muß, so daß dieser Aufwand des Elektronenstrahlschweibens für die Ausbildung der axialen Schweißnaht 71 nicht noch einmal erbracht werden muß.

Durch die in Figur 5 dargestellte Variante ist erstmalig praktisch mit vernünftigem Aufwand herstellbar ein Rollenkörper angegeben, der über seine gesamte Manteloberfläche mit dem hochfesten Werkstoff des äußeren Metallmantels 4 versehen sein kann und eine feste Verbindung zwischen dem Oberflächenmantel 21 und dem Rumpfkörper 22 des stirnseitigen Anschlußteils 2' aufweist.

**Patentansprüche**

1. Rollenkörper aus Verbundwerkstoff, insbesondere als Förderrolle mit einem Rollenmantel (1) aus Schleuderguß für die Hüttenindustrie, mit einem äußeren, hochfesten ersten Metallmantel (4), einem damit verbunden innern, niedrig legierten zweiten Metallmantel (3) und mit wenigstens einem an dem Rollenmantel axial anliegenden stirnseitigen Anschlußteil (2, 2'), insbesondere Lagerzapfen, das durch eine radiale Umfangs-Schweißnaht (6, 6', 6'', 6''') mit den beiden Metallmänteln (3, 4) verbunden und in der Radialebene der Umfangs-Schweißnaht (6, 6', 6'', 6''') hohl ausgebildet ist, dadurch gekennzeichnet, daß die Umfangs-Schweißnaht (6, 6', 6'', 6''') im Elektronenstrahl-Schweißverfahren hergestellt ist und daß das an dem Rollenmantel (1) axial angliegende stirnseitige Anschlußteil (2, 2') zur Ausbildung einer die radiale Umfangs-Schweißnaht (6, 6', 6'', 6''') nach radial innen abschließenden Nahtwurzel mit einem zylindrischen axial vorspringenden Ansatz (7) versehen ist.

2. Rollenkörper nach Anspruch 1, dadurch gekennzeichnet, daß die Schweißnähte (6, 6''') über die gesamte Tiefe der beiden Metallmäntel (3, 4) ohne Zusatzwerkstoff hergestellt sind.

3. Rollenkörper nach Anspruch 1, dadurch gekennzeichnet, daß die Schweißnähte (6', 6''), zwischen dem inneren Metallmantel (3) und dem stirnseitigen Anschlußteil (2, 2') als schmale Schweißnaht (61) ohne Zusatzwerkstoff und die Schweißnähte (6', 6'') zwischen dem äußeren Metallmantel (4) und dem stirnseitigen Anschlußteil (2, 2') als breitere Schweißnaht (62) mit Zusatzwerkstoff ausgebildet sind.

4. Rollenkörper nach einem der Ansprüche 1 bis 3, dadurch gekennzeichnet, daß sich das Material des äußeren Metallmantels (4) über die Manteloberfläche des stirnseitigen Anschlußteils (2') erstreckt und daß eine radiale Schweißnaht (6'', 6''') zwischen dem stirnseitigen Anschlußteil (2') und dem inneren Metallmantel (3) sowie damit fluchtend in dem Material des äußeren Metallmantels (4) hergestellt ist.

5. Rollenkörper nach Anspruch 4, dadurch gekennzeichnet, daß eine zylindrische axiale Schweißnaht (71) zwischen de Oberflächenmantel (21) des stirnseitigen Anschlußteils (2') und der Manteloberfläche des Rumpfkörpers (22) des stirnseitigen Anschlußteils (2') im Elektronenstrahl-Schweißverfahren hergestellt ist.

6. Verfahren zur Herstellung eines Rollenkörpers nach Anspruch 4 oder 5, dadurch gekennzeichnet, daß bei der Herstellung des Rollenmantels (1) der äußere Metallmantel (4) mit einer größeren Länge als der innere Metallmantel (3) hergestellt wird, so daß der überstehende Teil des äußeren Metallmantels (4) den Oberflächenmantel (21) des stirnseitigen Anschlußteils (2') bildet und daß die Verschgweißung des inneren Metallmantels (3) mit dem Rumpfkörper (22) des stirnseitigen Anschlußteils (2') durch das Material des äußeren Metallmantels (4) hindurch erfolgt.

**Revendications**

1. Corps de rouleau en matériau composite, en particulier rouleau de transport, comportant une enveloppe (1) en fonte centrifugée pour l'industrie métallurgique, constituée dune première enveloppe métallique extérieure (4) très résistante, d'une seconde enveloppe métallique intérieure (3), faiblement alliée qui lui est reliée, et comportant aussi au moins une pièce frontale de raccordement (2, 2'), en particulier un tourillon, qui s'appuie axialement contre l'enveloppe, qui est relié aux deux enveloppes métalliques (3, 4) par un cordon de soudure périphérique radial (6, 6', 6'', 6''') et qui est creux dans le plan radial du cordon de soudure périphérique (6, 6', 6'', 6'''), caractérisé en ce que le cordon de soudure périphérique (6, 6', 6'', 6''') est réalisé par le procédé de soudage par faisceau électronique et en ce que, pour permettre la formation d'un pied de cordon de soudure terminant radialement vers l'intérieur le cordon de soudure périphérique radial (6, 6', 6'', 6'''), la pièce frontale de raccordement (2, 2'), qui s'apuie axialement contre l'enveloppe (1), est munie d'un embout cylindrique (7) saillant axialement.

2. Corps de rouleau selon la revendication 1, caractérisé en ce que, sur toute la profondeur des deux enveloppes métalliques (3, 4) les cordons de soudure (6, 6''') sont réalisés sans matériau d'apport.

3. Corps de rouleau selon la revendication 1, caractérisé en ce qu'entre l'enveloppe métallique intérieure (3) et la piéce frontale de raccordement (2, 2'), les cordons de soudure (6, 6'') sont conçus sous forme de cordon de soudure étroit (61) sans matériau d'apport et qu'entre l'enveloppe métallique extérieure (4) et la pièce frontale de raccordement (2, 2'), les cordons de soudure (6', 6'') sont couçus comme cordon de soudure plus large (62) avec matériau d'apport.

4. Corps de rouleau selon l'une des revendications 1 à 3, caractérisé en ce que le matériau de l'enveloppe métallique extérieure (4) s'étend audessus de la surface d'enveloppe de la pièce frontale de raccordement (2') et en ce qu'un cordon de soudure radial (6'', 6''') est réalisé entre la pièce frontale de raccordement (2') et l'enveloppe métallique intérieure (3) ainsi que, affleurant avec celui-ci, dans le matériau de l'enveloppe métallique extérieure (4).

5. Corps de rouleau selon la revendication 4, caractérisé en ce qu'un cordon de soudure axial cylindrique (71) est réalisé, par le procédé de soudage par faisceau électronique, entre l'enveloppe de surface (21) de la pièce frontale de raccordement (2') et la surface d'enveloppe du corps (22) de la pièce frontale de raccordement (2').

6. Procédé de fabrication d'un corps de rouleau selon la revendication 4 ou 5, caractérisé en ce que lors de la fabrication de l'enveloppe (1) du rouleau, on fabrique l'enveloppe métallique extérieure (4) avec une longueur plus grande que l'enveloppe métallique intérieure (3), de façon que la partie débordante de l'enveloppe métallique extérieure (4) forme l'enveloppe de surface (21) de la pièce frontale de raccordement (2') et en ce que le soudage de l'enveloppe métallique intérieure (3) avec le corps (22) de la pièce frontale de raccordement (2') se fait à travers le matériau de l'enveloppe métallique extérieure (4).

**Claims**

1. Roller body of composite material, in particular in the form of a transport roller having a roller casing (1) of a spun casting for the iron and steel industry, having an outer high-strength first metal casing (4), an inner, low-alloy second metal casing (3) connected thereto and at least one connecting part (2, 2') bearing axially against the roller casing at the end face, in particular a journal, which is connected to the two metal casings (3, 4) by a radial peripheral weld seam (6, 6', 6'', 6''') and which is constructed to be hollow in the radial plane of the peripheral weld seam (6, 6', 6'', 6'''), characterized in that the peripheral weld seam (6, 6', 6'', 6''') is produced by the electron beam welding process, and in that the connecting part (2, 2') bearing axially against the roller casing (1) at the end face is provided with a cylindrical, axially projecting shoulder (7) for the construction of a seam root closing the radial peripheral weld seam (6, 6', 6'', 6''') radially inwardly.

2. Roller body according to Claim 1, characterized in that the weld seams (6, 6''') are produced over the entire depth of the two metal casings (3, 4) without filler material.

3. Roller body according to Claim 1, characterized in that the weld seams (6', 6'') between the inner metal casing (3) and the connecting part (2, 2') at the end face are constructed as a narrow weld seam (61) without filler material, and the weld seams (6', 6'') between the outer metal casing (4) and the connecting part (2, 2') at the end face are constructed as a broader weld seam (62) with filler material.

4. Roller body according to one of Claims 1 to 3, characterized in that the material of the outer metal casing (4) extends over the casing surface of the connecting part (2') at the end face, and in that a radial weld seam (6'', 6''') is produced between the connecting part (2') at the end face and the inner metal casing (3), and flush therewith in the material of the outer metal casing (4).

5. Roller body according to Claim 4, characterized in that a cylindrical axial weld seam (71) is produced between the surface casing (21) of the connecting part (2') at the end face and the casing surface of the main body (22) of the connecting part (2') at the end face by the electron beam welding process.

6. Process for producing a roller body according to Claim 4 or 5, characterized in that, in producing the roller casing (1), the outer metal casing (4) is produced with a greater length than the inner metal casing (3), so that the projecting part of the outer metal casing (4) forms the surface casing (21) of the connecting part (2') at the end face, and in that the inner metal casing (3) is welded to the main body (22) of the connecting part (2') at the end face through the material of the outer metal casing (4).

Fig. 1

EP 0 293 428 B1

Fig 2

Fig 3

Fig. 4

Fig. 5